(19) Europäisches Patentamt

European Patent Office

Office européen des brevets

(11) **EP 4 410 749 A1**

# (12) EUROPEAN PATENT APPLICATION

published in accordance with Art. 153(4) EPC

(43) Date of publication:
**07.08.2024 Bulletin 2024/32**

(21) Application number: **22874580.8**

(22) Date of filing: **06.09.2022**

(51) International Patent Classification (IPC):
*C03C 3/083* (2006.01)   *C03C 3/089* (2006.01)
*C03C 3/091* (2006.01)   *C03C 3/093* (2006.01)

(52) Cooperative Patent Classification (CPC):
**C03C 3/083; C03C 3/087; C03C 3/089;**
**C03C 3/091; C03C 3/093; C03C 3/095; C03C 3/097**

(86) International application number:
**PCT/CN2022/117241**

(87) International publication number:
**WO 2023/051190 (06.04.2023 Gazette 2023/14)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **29.09.2021   CN 202111151059**

(71) Applicant: CDGM Glass Co. Ltd.
**Chengdu, Sichuan 610100 (CN)**

(72) Inventors:
• **MAO, Lulu**
**Chengdu, Sichuan 610100 (CN)**
• **KUANG, Bo**
**Chengdu, Sichuan 610100 (CN)**
• **HAO, Liangzhen**
**Chengdu, Sichuan 610100 (CN)**
• **MA, He**
**Chengdu, Sichuan 610100 (CN)**
• **NIE, Xiaobing**
**Chengdu, Sichuan 610100 (CN)**

(74) Representative: **Bandpay & Greuter**
**11 rue Christophe Colomb**
**75008 Paris (FR)**

## (54) GLASS COMPOSITION

(57)     The present invention provides a glass composition, wherein components thereof are represented by weight percentage, comprising: 50-70% of $SiO_2$; 3-20% of $B_2O_3$; 11-25% of $Al_2O_3$; 1-15% of CaO; 0-10% of MgO. Through rational component design, the glass composition of the present invention features excellent chemical stability, high UV light transmittance and transition temperature, so as to meet the requirements for carrier and packaging in semiconductor manufacturing process and to be applicable for semiconductor manufacturing field.

**Description**

Technical Field

The present invention relates to a glass composition, in particular to a glass composition applicable for semiconductor manufacturing field.

Background

Owing to obvious advantages over other materials (such as metal, crystal, and ceramic) in terms of light transmission performance, chemical performance, mechanical performance, electrical characteristic, manufacturing and processing costs, glass has been gradually used in semiconductor packaging, semiconductor manufacturing process, and other applications in recent years. With the increasing integration of semiconductor chip devices, carrier materials are needed in chip packaging process to prevent the deformation of packaging wafer and improve the yield of chip packaging. The glass is a promising material for semiconductor chip packaging carrier due to its good mechanical stability, excellent light transmittance and ultra-large size at a low cost.

The higher the transition temperature ($T_g$) of the glass used to package the carrier, the higher the tolerance of the glass in high-temperature manufacturing process, and the less easy to be deformed in the high-temperature manufacturing process, especially in the semiconductor manufacturing process that needs to be above 500°C to 600°C. The transition temperature of the glass needs to be higher than 600°C. Compared with traditional stripping technology, UV laser stripping technology has the advantages of high yield and low cost, but the UV laser stripping technology requires the carrier glass composition to have high permeability near 365nm. The carrier glass used in semiconductor packaging, with a high value, needs to be recycled dozens or even hundreds of times, and should be cleaned after each use. If the water resistance and acid resistance of the glass composition are poor, the smooth surface thereof will be destroyed during the cleaning process, thereby shortening its service life. More seriously, the carrier glass will be exposed to acid-base chemical reagents in the semiconductor manufacturing process. If the chemical stability is poor, the substance in the glass will be corroded into the acid-base solution used in the process, resulting in premature scrapping of the process liquid, thereby causing huge losses. Therefore, as the carrier glass, it needs to have excellent chemical stability.

Summary

Based on the above reasons, the technical problem to be solved by the present invention is to provide a glass composition with excellent chemical stability, high transition temperature and UV light transmittance.

To solve the technical problem, the present invention provides the technical solution as below:

(1) A glass composition, wherein components thereof are represented by weight percentage, comprising: 50-70% of $SiO_2$; 3-20% of $B_2O_3$; 11-25% of $Al_2O_3$; 1-15% of CaO; 0-10% of MgO.

(2) The glass composition according to (1), wherein components thereof are represented by weight percentage, further comprising: 0-10% of SrO; and/or 0-10% of BaO; and/or 0-8% of ZnO; and/or 0-8% of $Rn_2O$; and/or 0-8% of $Ln_2O_3$; and/or 0-5% of $WO_3$; and/or 0-5% of $ZrO_2$; and/or 0-5% of $TiO_2$; and/or 0-5% of $P_2O_5$; and/or 0-1% of clarifying agent; the $Rn_2O$ is one or more of $Li_2O$, $Na_2O$, and $K_2O$, $Ln_2O_3$ is one or more of $La_2O_3$, $Gd_2O_3$, $Y_2O_3$, and $Yb_2O_3$, and the clarifying agent is one or more of $Sb_2O_3$, $CeO_2$, $SnO_2$, and SnO.

(3) The glass composition, wherein components thereof contain $SiO_2$, $B_2O_3$, $Al_2O_3$, and alkaline-earth metal oxide, transition temperature $T_g$ of the glass composition is above 620°C, outer transmittance $\tau_{365nm}$ is above 70% at 365nm, and the alkaline-earth metal oxide is one or more of MgO, CaO, SrO, and BaO.

(4) The glass composition according to (3), wherein components thereof are represented by weight percentage, comprising: 50-70% of $SiO_2$; and/or 3-20% of $B_2O_3$; and/or 11-25% of $Al_2O_3$; and/or 1-15% of CaO; and/or 0-10% of MgO; and/or 0-10% of SrO; and/or 0-10% of BaO; and/or 0-8% of ZnO; and/or 0-8% of $Rn_2O$; and/or 0-8% of $Ln_2O_3$; and/or 0-5% of $WO_3$; and/or 0-5% of $ZrO_2$; and/or 0-5% of $TiO_2$; and/or 0-5% of $P_2O_5$; and/or 0-1% of clarifying agent; the $Rn_2O$ is one or more of $Li_2O$, $Na_2O$, and $K_2O$, $Ln_2O_3$ is one or more of $La_2O_3$, $Gd_2O_3$, $Y_2O_3$, and $Yb_2O_3$, and the clarifying agent is one or more of $Sb_2O_3$, $CeO_2$, $SnO_2$, and SnO.

(5) The glass composition according to any of (1)-(4), wherein components thereof are represented by weight percentage, in which: $Al_2O_3/B_2O_3$ is 0.6-4.0, $Al_2O_3/B_2O_3$ is preferably 0.8-3.5, $Al_2O_3/B_2O_3$ is more preferably 1.0-3.0, and $Al_2O_3/B_2O_3$ is further preferably 1.2-2.5.

(6) The glass composition according to any of (1)-(5), wherein components thereof are represented by weight percentage, in which: $CaO/SiO_2$ is 0.02-0.25, $CaO/SiO_2$ is preferably 0.04-0.22, $CaO/SiO_2$ is more preferably 0.08-0.2, and $CaO/SiO_2$ is further preferably 0.1-0.18.

(7) The glass composition according to any of (1)-(6), wherein components thereof are represented by weight percentage, in which: $(MgO+CaO)/B_2O_3$ is 0.1-4.0, $(MgO+CaO)/B_2O_3$ is preferably 0.2-3.5, $(MgO+CaO)/B_2O_3$ is more preferably 0.3-2.0, and $(MgO+CaO)/B_2O_3$ is further preferably 0.5-1.5.

(8) The glass composition according to any of (1)-(7), wherein components thereof are represented by weight percentage, in which: $CaO/(BaO+SrO+MgO)$ is 0.5-10.0, $CaO/(BaO+SrO+MgO)$ is preferably 2.0-8.0, $CaO/(BaO+SrO+MgO)$ is more preferably 3.0-7.0, and $CaO/(BaO+SrO+MgO)$ is further preferably 3.5-6.0.

(9) The glass composition according to any of (1)-(8), wherein components thereof are represented by weight percentage, in which:

$(MgO+CaO+SrO+BaO)/(SiO_2+B_2O_3)$ is 0.02-0.7,
$(MgO+CaO+SrO+BaO)/(SiO_2+B_2O_3)$ is preferably 0.04-0.6,
$(MgO+CaO+SrO+BaO)/(SiO_2+B_2O_3)$ is more preferably 0.05-0.5, and
$(MgO+CaO+SrO+BaO)/(SiO_2+B_2O_3)$ is further preferably 0.08-0.3.

(10) The glass composition according to any of (1)-(9), wherein components thereof are represented by weight percentage, in which: $Rn_2O/(MgO+CaO)$ is below 1.0, $Rn_2O/(MgO+CaO)$ is preferably below 0.8, $Rn_2O/(MgO+CaO)$ is more preferably below 0.5, $Rn_2O/(MgO+CaO)$ is further preferably below 0.2, and the $Rn_2O$ is one or more of $Li_2O$, $Na_2O$, and $K_2O$.

(11) The glass composition according to any of (1)-(10), wherein components thereof are represented by weight percentage, in which: $Ln_2O_3/B_2O_3$ is below 1.0, $Ln_2O_3/B_2O_3$ is preferably below 0.8, $Ln_2O_3/B_2O_3$ is more preferably below 0.5, $Ln_2O_3/B_2O_3$ is further preferably below 0.2, and the $Ln_2O_3$ is one or more of $La_2O_3$, $Gd_2O_3$, $Y_2O_3$, and $Yb_2O_3$.

(12) The glass composition according to any of (1)-(11), wherein components thereof are represented by weight percentage, in which: $SiO_2$ is 54-68%, $SiO_2$ is preferably 55-64%; and/or $B_2O_3$ is 4-17%, $B_2O_3$ is preferably 6-15%; and/or $Al_2O_3$ is 12-24%, $Al_2O_3$ is preferably 14-20%; and/or CaO is 2-13%, CaO is preferably 4-9.5%; and/or MgO is 0.1-8%, MgO is preferably 0.5-5%; and/or SrO is 0-5%, SrO is preferably 0-2%; and/or BaO is 0-5%, BaO is preferably 0-2%; and/or ZnO is 0-5%, ZnO is preferably 0-3%; and/or $Rn_2O$ is 0-5%, $Rn_2O$ is preferably 0-2%; and/or $Ln_2O_3$ is 0-5%, $Ln_2O_3$ is preferably 0-2%; and/or $WO_3$ is 0-3%, $WO_3$ is preferably 0-1%; and/or $ZrO_2$ is 0-3%, $ZrO_2$ is preferably 0-1%; and/or $TiO_2$ is 0-2%, $TiO_2$ is preferably 0-1%; and/or $P_2O_5$ is 0-2%, $P_2O_5$ is preferably 0-1%; and/or clarifying agent is 0-0.8%, clarifying agent is preferably 0-0.5%; the $Rn_2O$ is one or more of $Li_2O$, $Na_2O$, and $K_2O$, $Ln_2O_3$ is one or more of $La_2O_3$, $Gd_2O_3$, $Y_2O_3$, and $Yb_2O_3$, and the clarifying agent is one or more of $Sb_2O_3$, $CeO_2$, $SnO_2$, and SnO.

(13) The glass composition according to any of (1)-(12), wherein the glass composition does not contain $Ln_2O_3$; and/or does not contain $Rn_2O$; and/or does not contain ZnO; and/or does not contain $ZrO_2$; and/or does not contain $TiO_2$; the $Rn_2O$ is one or more of $Li_2O$, $Na_2O$, and $K_2O$, and $Ln_2O_3$ is one or more of $La_2O_3$, $Gd_2O_3$, $Y_2O_3$, and $Yb_2O_3$.

(14) The glass composition according to any of (1)-(13), wherein thermal expansion coefficient $\alpha_{20/300°C}$ of the glass composition is $22\times10^{-7}$/K-$45\times10^{-7}$/K, preferably $23\times10^{-7}$/K-$40\times10^{-7}$/K, more preferably $25\times10^{-7}$/K-$38\times10^{-7}$/K, further preferably $28\times10^{-7}$/K-$37\times10^{-7}$/K; and/or transition temperature $T_g$ is above 620°C, preferably above 640°C, more preferably above 650°C, further preferably 660-800°C; and/or outer transmittance $\tau_{365nm}$ is above 70% at 365nm, preferably above 75%, more preferably above 80%, further preferably above 85%; and/or acid resistance stability $D_A$ is above Class 3, preferably above Class 2, more preferably Class 1; and/or water resistance stability Dw is above Class 3, preferably above Class 2, more preferably Class 1; and/or Young's modulus E is 60-90GPa, preferably 65-85GPa, more preferably 68-80GPa, further preferably 70-78GPa; and/or density $\rho$ is below 3.0g/cm$^3$, preferably below 2.8g/cm$^3$, more preferably below 2.6g/cm$^3$.

(15) A packaging material, made of the glass composition according to any of (1)-(14).

(16) A packaging carrier, made of the glass composition according to any of (1)-(14).

The beneficial effects of the present invention are as follows: through rational component design, the glass composition of the present invention features excellent chemical stability, high UV light transmittance and transition temperature, so as to meet the requirements for carrier and packaging in semiconductor manufacturing process and to be applicable for semiconductor manufacturing field.

Detailed Description

The implementations of the glass composition provided by the present invention will be described in detail below, but the present invention is not limited to the following implementations. Appropriate changes may be made within the scope of the purpose of the present invention for implementation. In addition, the repeated descriptions will not limit the aim of the invention although with appropriate omissions. In the following, the glass composition of the present invention is sometimes referred to as glass.

[Glass Composition]

In the following paragraphs, the range of components of the glass composition provided by the present invention will be described. If not specified herein, the content of each component and the total content are expressed in weight percentage (wt%) relative to the total glass materials converted into oxide composition. "Converted into oxide composition" therein refers to that the total weight of this oxide is taken as 100% when the oxide, compound salt and hydroxide, used as raw materials for the ingredients (components) of the glass composition provided by the present invention, are decomposed and transformed into oxides during melting.

Unless otherwise noted in specific circumstances, the numerical range listed herein includes upper and lower limits, and the words "above" and "below" include the endpoint values as well as all integers and fractions within the range, but not limited to the specific values listed when the range is limited. The term "about" as used herein refers to that formulations, parameters and other quantities as well as characteristics are not, and do not need to be, accurate, and may be approximate and/or greater or lower if necessary, reflecting tolerances, conversion factors, measurement errors, etc. "And/or" mentioned herein is inclusive. For example, "A and/or B" refers to only A, or only B, or both A and B.

<Necessary components and optional components>

$SiO_2$ serves as a key component of the glass provided by the present invention. In the glass of the present invention, an appropriate amount of $SiO_2$ can ensure higher water resistance and acid resistance of the glass, and meanwhile achieve high UV light transmittance. If the content of $SiO_2$ is less than 50%, the water resistance, acid resistance and UV light transmittance of the glass are lower than the design requirements. If the content of $SiO_2$ is higher than 70%, melting temperature of the glass will rise sharply, and thus it is not easy to obtain high-quality glass, and the thermal expansion coefficient of the glass will be lower than the design expectation. Therefore, the content of $SiO_2$ in the present invention is confined to 50-70%, preferably 54-68%, more preferably 55-64%. In some implementations, it can comprise about 50%, 50.5%, 51%, 51.5%, 52%, 52.5%, 53%, 53.5%, 54%, 54.5%, 55%, 55.5%, 56%, 56.5%, 57%, 57.5%, 58%, 58.5%, 59%, 59.5%, 60%, 60.5%, 61%, 61.5%, 62%, 62.5%, 63%, 63.5%, 64%, 64.5%, 65%, 65.5%, 66%, 66.5%, 67%, 67.5%, 68%, 68.5%, 69%, 69.5% or 70% of $SiO_2$.

$B_2O_3$ can the transform the glass structure to be dense in the glass, achieve higher water resistance and acid resistance, promote the decrease of high-temperature viscosity of the glass, and thus it is easier to obtain high-quality glass under low temperature. If the content of $B_2O_3$ is less than 3%, the above effect will not be obvious. If the content of $B_2O_3$ is higher than 20%, the water resistance and acid resistance of the glass will instead decrease. Therefore, the content of $B_2O_3$ is confined to 3-20%, preferably 4-17%, more preferably 6-15%. In some implementations, it can comprise about 3%, 3.5%, 4%, 4.5%, 5%, 5.5%, 6%, 6.5%, 7%, 7.5%, 8%, 8.5%, 9%, 9.5%, 10%, 10.5%, 11%, 11.5%, 12%, 12.5%, 13%, 13.5%, 14%, 14.5%, 15%, 15.5%, 16%, 16.5%, 17%, 17.5%, 18%, 18.5%, 19%, 19.5% or 20% of $B_2O_3$.

An appropriate amount of $Al_2O_3$ can adjust the Young's modulus of the glass and increase the thermal conductivity of the glass, and the above effect is obtained by comprising above 11% of $Al_2O_3$ in the present invention. If the content of $Al_2O_3$ is higher than 25%, the thermal expansion coefficient of the glass will decrease rapidly, the melting performance will deteriorate, and meanwhile devitrification is particularly easy to occur. Therefore, the content of $Al_2O_3$ is 11-25%, preferably 12-24%, more preferably 14-20%. In some implementations, it can comprise about 11%, 11.5%, 12%, 12.5%, 13%, 13.5%, 14%, 14.5%, 15%, 15.5%, 16%, 16.5%, 17%, 17.5%, 18%, 18.5%, 19%, 19.5%, 20%, 20.5%, 21%, 21.5%, 22%, 22.5%, 23%, 23.5%, 24%, 24.5% or 25% of $Al_2O_3$.

In some implementations, by controlling the ratio of the content of $Al_2O_3$ to the content of $B_2O_3$, i.e., $Al_2O_3/B_2O_3$, within a range of 0.6-4.0, it is possible to obtain the desired thermal expansion coefficient and meanwhile enhance the light transmittance and inherent quality of the glass. Therefore, $Al_2O_3/B_2O_3$ is preferably 0.6-4.0, $Al_2O_3/B_2O_3$ is more preferably 0.8-3.5, $Al_2O_3/B_2O_3$ is further preferably 1.0-3.0, and $Al_2O_3/B_2O_3$ is more further preferably 1.2-2.5. In some implementations, the value of $Al_2O_3/B_2O_3$ is about 0.6, 0.65, 0.7, 0.75, 0.8, 0.85, 0.9, 0.95, 1.0, 1.05, 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, 2.0, 2.05, 2.1, 2.15, 2.2, 2.25, 2.3, 2.35, 2.4, 2.45, 2.5, 2.55, 2.6, 2.65, 2.7, 2.75, 2.8, 2.85, 2.9, 2.95, 3.0, 3.05, 3.1, 3.15, 3.2, 3.25, 3.3, 3.35, 3.4, 3.45, 3.5, 3.55, 3.6, 3.65, 3.7, 3.75, 3.8, 3.85, 3.9, 3.95 or 4.0.

MgO can increase the chemical stability of the glass, and adjust the optical constant of the glass. If the content of MgO exceeds 10%, the thermal expansion coefficient of the glass will decrease, which is difficult to meet the design requirements. Therefore, the content of MgO is 0-10%, preferably 0.1-8%, more preferably 0.5-5%. In some implementations, it can comprise about 0%, greater than 0%, 0.01%, 0.05%, 0.1%, 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5% or 10% of MgO.

CaO can increase the thermal stability and refractive index of the glass, and adjust the thermal expansion coefficient. The present invention obtains the above effect by comprising over 1% of CaO. On the other hand, if the content of CaO is higher than 15%, the devitrification resistance of the glass will deteriorate, and the Young's modulus will be beyond the design requirements. Therefore, the content of CaO is 1-15%, preferably 2-13%, more preferably 4-9.5%. In some implementations, it can comprise about 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, 10.5%, 11%, 11.5%, 12%, 12.5%, 13%, 13.5%, 14%, 14.5% or 15% of CaO.

In some implementations of the present invention, by controlling the ratio of the content of CaO to the content of $SiO_2$, i.e., $CaO/SiO_2$, within a range of 0.02-0.25, it can enable the glass to obtain the desired transition temperature and meanwhile optimize the devitrification resistance of the glass. Therefore, $CaO/SiO_2$ is preferably 0.02-0.25, $CaO/SiO_2$ is more preferably 0.04-0.22, $CaO/SiO_2$ is further preferably 0.08-0.2, and $CaO/SiO_2$ is more further preferably 0.1-0.18. In some implementations, the value of $CaO/SiO_2$ is about 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, 0.21, 0.22, 0.23, 0.24 or 0.25.

In some implementations, by controlling the ratio of the total content of MgO and CaO (MgO+CaO) to the content of $B_2O_3$, i.e., $(MgO+CaO)/B_2O_3$, within a range of 0.1-4.0, it is possible to easily obtain the desired Young's modulus and meanwhile increase the chemical stability and light transmittance of the glass. Therefore, $(MgO+CaO)/B_2O_3$ is preferably 0.1-4.0, $(MgO+CaO)/B_2O_3$ is more preferably 0.2-3.5, $(MgO+CaO)/B_2O_3$ is further preferably 0.3-2.0, and $(MgO+CaO)/B_2O_3$ is more further preferably 0.5-1.5. In some implementations, the value of $(MgO+CaO)/B_2O_3$ is about 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9 or 4.0.

BaO can increase the refractive index and transition temperature of the glass, and optimize the stability and mechanical performance of the glass. If the content of BaO exceeds 10%, the density of the glass will increase, and the chemical stability will deteriorate. Therefore, the content of BaO is 0-10%, preferably 0-5%, more preferably 0-2%. In some implementations, it can comprise about 0%, greater than 0%, 0.01%, 0.05%, 0.1%, 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5% or 10% of BaO.

The role of SrO is similar to that of BaO. If the content of SrO exceeds 10%, the thermal expansion coefficient of the glass will fail to meet the design requirements, and meanwhile the chemical stability of the glass will decrease sharply. Therefore, the content of SrO is below 10%, preferably below 5%, more preferably below 2%. In some implementations, it can comprise about 0%, greater than 0%, 0.01%, 0.05%, 0.1%, 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5% or 10% of SrO.

In some implementations, by controlling the ratio of the content of CaO to the total content of BaO, SrO, and MgO (BaO+SrO+MgO), i.e., CaO/(BaO+SrO+MgO), within a range of 0.5-10.0, it can enable the thermal expansion coefficient of the glass to easily meet the design requirements, and meanwhile it can optimize the melting temperature of the glass, increase the light transmittance, and increase the chemical stability. Therefore, CaO/(BaO+SrO+MgO) is preferably 0.5-10.0, CaO/(BaO+SrO+MgO) is more preferably 2.0-8.0, CaO/(BaO+SrO+MgO) is further preferably 3.0-7.0, and CaO/(BaO+SrO+MgO) is more further preferably 3.5-6.0. In some implementations, the value of CaO/(BaO+SrO+MgO) is about 0.5, 0.6, 0.7, 0.8, 0.9, 1.0, 1.3, 1.5, 1.7, 2.0, 2.3, 2.5, 2.7, 3.0, 3.3, 3.5, 3.7, 4.0, 4.3, 4.5, 4.7, 5.0, 5.3, 5.5, 5.7, 6.0, 6.3, 6.5, 6.7, 7.0, 7.3, 7.5, 7.7, 8.0, 8.3, 8.5, 8.7, 9.0, 9.3, 9.5, 9.7 or 10.0.

In some implementations, by controlling the ratio of the total content of alkaline-earth metal oxides MgO, CaO, SrO, and BaO (MgO+CaO+SrO+BaO) to the total content of $SiO_2$ and $B_2O_3$ ($SiO_2$+$B_2O_3$), i.e., $(MgO+CaO+SrO+BaO)/(SiO_2+B_2O_3)$, within a range of 0.02-0.7, it is possible to easily obtain the desired Young's modulus and meanwhile increase the chemical stability and transition temperature of the glass. Therefore, $(MgO+CaO+SrO+BaO)/(SiO_2+B_2O_3)$ is preferably 0.02-0.7, $(MgO+CaO+SrO+BaO)/(SiO_2+B_2O_3)$ is more preferably 0.04-0.6, $(MgO+CaO+SrO+BaO)/(SiO_2+B_2O_3)$ is further preferably 0.05-0.5, and $(MgO+CaO+SrO+BaO)/(SiO_2+B_2O_3)$ is more further preferably 0.08-0.3. In some implementations, the value of $(MgO+CaO+SrO+BaO)/(SiO_2+B_2O_3)$ is about 0.02, 0.03, 0.04, 0.05, 0.06, 0.07, 0.08, 0.09, 0.1, 0.13, 0.15, 0.17, 0.2, 0.23, 0.25, 0.27, 0.3, 0.33, 0.35, 0.37, 0.4, 0.43, 0.45, 0.47, 0.5, 0.53, 0.55, 0.57, 0.6, 0.63, 0.65, 0.67 or 0.7.

ZnO can improve the chemical stability and reduce the thermal expansion coefficient in the glass. If the content of ZnO is excessive, the transition temperature of the glass will decrease rapidly, so that the glass is easy to soften and deform under high-temperature working environment, exerting a fatal effect on glass devices that need to work at high temperature. Therefore, the content of ZnO is below 8%, preferably below 5%, more preferably below 3%. In some implementations, it further preferably contains no ZnO. In some implementations, it can comprise about 0%, greater than 0%, 0.01%, 0.05%, 0.1%, 0.5%, 1%, 1.5%, 2%, 2.5%, 3%, 3.5%, 4%, 4.5%, 5%, 5.5%, 6%, 6.5%, 7%, 7.5% or 8% of ZnO.

$Rn_2O$ ($Rn_2O$ is one or more of $Li_2O$, $Na_2O$, and $K_2O$) can reduce the melting temperature and density of the glass. However, when the content of $Rn_2O$ is high, the transition temperature of the glass will decrease. On the other hand, when the glass comprising $Rn_2O$ is used as the carrier, alkali metal ions $Li^+$, $Na^+$, and $K^+$ will enter the monocrystalline silicon substrate and pollute the chip circuit. Therefore, the content of $Rn_2O$ is confined to be below 8%, preferably below 5%, more preferably below 2%, further preferably 0%. In some implementations, it can comprise about 0%, greater than 0%, 0.01%, 0.05%, 0.1%, 0.5%, 1%, 1.5%, 2%, 2.5%, 3%, 3.5%, 4%, 4.5%, 5%, 5.5%, 6%, 6.5%, 7%, 7.5% or 8% of $Rn_2O$.

In some implementations, by controlling the ratio of the content of $Rn_2O$ to the total content of MgO and CaO (MgO+CaO), i.e., $Rn_2O/(MgO+CaO)$, to be below 1.0, it is conducive to improving the chemical stability of the glass to obtain the desired thermal expansion coefficient. Therefore, $Rn_2O/(MgO+CaO)$ is preferably below 1.0, $Rn_2O/(MgO+CaO)$ is more preferably below 0.8, $Rn_2O/(MgO+CaO)$ is further preferably below 0.5, and $Rn_2O/(MgO+CaO)$ is more further preferably below 0.2. In some implementations, the value of $Rn_2O/(MgO+CaO)$ is about 0, greater than 0, 0.01, 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95 or 1.0.

$Ln_2O_3$ ($Ln_2O_3$ is one or more of $La_2O_3$, $Gd_2O_3$, $Y_2O_3$, and $Yb_2O_3$) can increase the thermal expansion coefficient and refractive index of the glass. However, if the content of $Ln_2O_3$ is excessive, the devitrification resistance of the glass will decrease, and the Young's modulus and transition temperature will be difficult to meet the design requirements. Therefore, $Ln_2O_3$ is below 8%, preferably below 5%, more preferably below 2%, further preferably 0%. In some implementations, it can comprise about 0%, greater than 0%, 0.01%, 0.05%, 0.1%, 0.5%, 1%, 1.5%, 2%, 2.5%, 3%, 3.5%, 4%, 4.5%, 5%, 5.5%, 6%, 6.5%, 7%, 7.5% or 8% of $Ln_2O_3$.

In some implementations, by controlling the ratio of the content of $Ln_2O_3$ to the content of $B_2O_3$, i.e., $Ln_{12}O_3B_2O_3$, to be below 1.0, it is possible to easily obtain the desired thermal expansion coefficient and meanwhile increase the chemical stability of the glass. Therefore, $Ln_2O_3/B_2O_3$ is preferably below 1.0, $Ln_2O_3/B_2O_3$ is more preferably below 0.8, $Ln_2O_3/B_2O_3$ is further preferably below 0.5, and $Ln_2O_3/B_2O_3$ is more further preferably below 0.2. In some implementations, the value of $Ln_2O_3/B_2O_3$ is about 0, greater than 0, 0.01, 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95 or 1.0.

$WO_3$ can increase the refractive index and mechanical strength of the glass. If the content of $WO_3$ is high, the light transmittance and transition temperature of the glass will decrease. Therefore, the content of $WO_3$ is confined to be below 5%, preferably below 3%, more preferably below 1%. In some implementations, it can comprise about 0%, greater than 0%, 0.01%, 0.05%, 0.1%, 0.5%, 1%, 1.5%, 2%, 2.5%, 3%, 3.5%, 4%, 4.5% or 5% of $WO_3$.

$ZrO_2$ can improve the devitrification resistance capacity in the glass, and meanwhile enhance the chemical stability of the glass. However, if the content of $ZrO_2$ exceeds 5%, the thermal expansion coefficient of the glass will decrease significantly, which is difficult to meet the design requirements, and meanwhile the melting performance of the glass will decrease, the high-temperature viscosity will increase significantly, and the glass is prone to non-melting substances. Therefore, the content of $ZrO_2$ is confined to be below 5%, preferably below 3%, more preferably below 1%, further preferably 0%. In some implementations, it can comprise about 0%, greater than 0%, 0.01%, 0.05%, 0.1%, 0.5%, 1%, 1.5%, 2%, 2.5%, 3%, 3.5%, 4%, 4.5% or 5% of $ZrO_2$.

$TiO_2$ can enhance the devitrification resistance and mechanical strength of the glass. If the content of $TiO_2$ exceeds 5%, UV transmittance of the glass will decrease rapidly to make subsequent laser stripping difficult, and meanwhile the thermal expansion coefficient of the glass will decrease. Therefore, the content of $TiO_2$ is below 5%, preferably below 2%, more preferably below 1%, further preferably 0%. In some implementations, it can comprise about 0%, greater than 0%, 0.01%, 0.05%, 0.1%, 0.5%, 1%, 1.5%, 2%, 2.5%, 3%, 3.5%, 4%, 4.5% or 5% of $TiO_2$.

$P_2O_5$ is an optional component for improving the devitrification resistance of the glass. In particular, when the content of $P_2O_5$ is below 5%, the decrease in chemical stability of the glass can be suppressed. Therefore, the content of $P_2O_5$ is confined to be below 5%, preferably below 2%, more preferably below 1%. In some implementations, it can comprise about 0%, greater than 0%, 0.01%, 0.05%, 0.1%, 0.5%, 1%, 1.5%, 2%, 2.5%, 3%, 3.5%, 4%, 4.5% or 5% of $P_2O_5$.

The glass provided by the present invention comprises 0-1% of clarifying agent to increase the clarifying capability of the glass, and increase the bubble degree of the glass. The content of the clarifying agent is preferably 0-0.8%, more preferably 0-0.5%. The clarifying agent may comprise one or more of $Sb_2O_3$, $CeO_2$, $SnO_2$, and SnO., Because $CeO_2$, $SnO_2$, and SnO can seriously damage the UV transmittance of the glass when compared with $Sb_2O_3$, $Sb_2O_3$ is preferably used as the clarifying agent in the present invention. In some implementations, it can comprise about 0%, greater than 0%, 0.01%, 0.05%, 0.1%, 0.15%, 0.2%, 0.25%, 0.3%, 0.35%, 0.4%, 0.45%, 0.5%, 0.55%, 0.6%, 0.65%, 0.7%, 0.75%, 0.8%, 0.85%, 0.9%, 0.95% or 1% of clarifying agent.

<Unnecessary components>

Th, Cd, Tl, Os, Be and Se oxides have been used in a controlled manner as a harmful chemical substance in recent years, which is necessary not only in the glass manufacturing process, but also in the processing procedure and disposal after the productization for environmental protection measures. Therefore, in the case of attaching importance to the influence on the environment, it is preferably not actually included except for the inevitable incorporation. As a result, the glass does not actually contain a substance that contaminates the environment. Therefore, the glass of the present invention can be manufactured, processed, and discarded even if no measure is taken as a special environmental countermeasure.

In order to achieve environmental friendliness, $As_2O_3$ and PbO are not contained in the glass of the present invention. Although $As_2O_3$ can eliminate bubbles and better prevent glass from coloring, the addition of $As_2O_3$ will increase the platinum erosion of glass on the furnace, especially on the platinum furnace, resulting in more platinum ions entering the glass. It brings a negative impact on the service life of the platinum furnace. PbO can significantly improve the high refractive index and high dispersion performance of the glass, but both PbO and $As_2O_3$ cause environmental pollution.

The terms "not contained" and "0%" as used herein mean that the compound, molecule or element and the like are not intentionally added to the glass of the present invention as raw materials; however, as raw materials and/or equipment for the production of glass, there will be some impurities or components that are not intentionally added in small or trace amounts in the final glass, and this situation also falls within the protection scope of the present invention patent.

Hereinafter, the performance of the glass composition provided by the present invention will be described.

<Acid resistance stability>

The acid resistance stability ($D_A$) (powder method) of the glass composition is tested as per the method specified in *GB/T 17129*.

The acid resistance stability ($D_A$) of the glass composition provided by the present invention is above Class 3, preferably above Class 2, more preferably Class 1.

<Water resistance stability>

The water resistance stability (Dw) (powder method) of the glass composition is tested as per the method specified in *GB/T 17129*.

The water resistance stability (Dw) of the glass composition provided by the present invention is above Class 3, preferably above Class 2, more preferably Class 1.

<Thermal expansion coefficient>

The thermal expansion coefficient ($\alpha_{20/300°C}$) of the glass composition is tested at 20-300°C as per the method specified in *GB/T 7962.16-2010*.

In some implementations, the lower limit of the thermal expansion coefficient ($\alpha_{20/300°C}$) of the glass composition provided by the present invention is $22\times10^{-7}$/K, preferably $23\times10^{-7}$/K, more preferably $25\times10^{-7}$/K, further preferably $28\times10^{-7}$/K.

In some implementations, the upper limit of the thermal expansion coefficient ($\alpha_{20/300°C}$) of the glass composition provided by the present invention is $45\times10^{-7}$/K, preferably $40\times10^{-7}$/K, more preferably $38\times10^{-7}$/K, further preferably $37\times10^{-7}$/K.

<Light transmittance>

The light transmittance mentioned in the present invention refers to the outer transmittance of 10mm-thick glass sample at 365nm, which is represented by $\tau_{365nm}$ and tested as per the method specified in *GB/T 7962.12-2010*.

In some implementations, the outer transmittance at 365nm ($\tau_{365nm}$) of the glass composition provided by the present invention is above 70%, preferably above 75%, more preferably above 80%, further preferably above 85%.

<Transition temperature>

The transition temperature (Tg) of the glass composition is tested as per the method specified in *GB/T 7962.16-2010*.

In some implementations, the transition temperature ($T_g$) of the glass composition provided by the present invention is above 620°C, preferably above 640°C, more preferably above 650°C, further preferably 660-800°C.

<Young's modulus>

The Young's modulus (E) of the glass composition is calculated according to the following formula:

$$E = \frac{4G^2 - 3GV_T^{\,2}\rho}{G - V_T^{\,2}\rho}$$

$$G = V_S^2 \rho$$

Where,                    where:

E refers to Young's modulus, Pa;
G refers to shear modulus, Pa;
$V_T$ refers to P-wave velocity, m/s;
Vs refers to S-wave velocity, m/s;
$\rho$ refers to glass density, g/cm$^3$.

In some implementations, the upper limit of the Young's modulus (E) of the glass composition provided by the present invention is 90 GPa, preferably 85 GPa, more preferably 80 GPa, further preferably 78 GPa.

In some implementations, the lower limit of the Young's modulus (E) of the glass composition provided by the present invention is 60 GPa, preferably 65 GPa, more preferably 68 GPa, further preferably 70 GPa.

<Density>

The density ($\rho$) of the glass composition is tested as per the method specified in *GB/T 7962.20-2010.*

In some implementations, the density ($\rho$) of the glass composition provided by the present invention is below 3.0g/cm$^3$, preferably below 2.8g/cm$^3$, more preferably below 2.6g/cm$^3$.

The glass composition of the present invention, with the above excellent performance, can be widely used in the packaging field of electronic devices and photosensitive devices, and can also be used in the manufacture of glass elements and various equipment or instruments, such as imaging device, sensor, microscope, medical technology, digital projection, communication, optical communication technology/information transmission, optics/lighting in the automobile field, photolithography, excimer laser, wafer, computer chip, and integrated circuit and electronic device including such circuit and chip, or camera equipment and device used in the fields of on-board product, surveillance and security. It can be applied in the semiconductor packaging and semiconductor manufacturing process to make packaging material and/or packaging carrier, etc.

[Manufacturing method]

The manufacturing method of the glass composition provided by the present invention is as follows: The glass of the present invention is made of conventional raw materials with conventional process. Use carbonate, nitrate, sulfate, hydroxide, oxide, fluoride, phosphate, and metaphosphate as raw materials, mix the ingredients according to the conventional method, and then feed the mixed furnace burden into a 1400-1600°C smelting furnace for melting. Later, obtain homogeneous melted glass without bubbles and undissolved substances after clarification, stirring and homogenization, shape the molten glass in a mould and perform annealing. Those skilled in the art can appropriately select raw materials, process methods and process parameters according to actual needs.

Embodiment

The following non-limiting embodiments are provided in order to further clearly explain and illustrate the technical solution of the present invention. This embodiment obtains the glass composition with the composition shown in Tables 1 to 3 by the above manufacturing method of glass composition. In addition, the characteristics of each glass are measured by the test method described in the present invention, and the measurement results are shown in Tables 1 to 3.

Table 1.

| Embodiment (wt%) | 1# | 2# | 3# | 4# | 5# | 6# | 7# |
|---|---|---|---|---|---|---|---|
| SiO$_2$ | 53.6 | 55.2 | 60.7 | 62.3 | 64.2 | 57.5 | 56.6 |
| B$_2$O$_3$ | 8.2 | 11.45 | 8.7 | 11.7 | 10.48 | 14.3 | 13.1 |
| Al$_2$O$_3$ | 22.5 | 20.6 | 18.4 | 15.4 | 11.5 | 21.5 | 15.6 |
| MgO | 3.6 | 2.5 | 2.1 | 0.4 | 1.7 | 0.8 | 1.2 |
| CaO | 11.5 | 9.6 | 10.0 | 8.5 | 8.0 | 5.8 | 10.4 |
| SrO | 0 | 0 | 0 | 0 | 0 | 0 | 2.0 |

(continued)

| Embodiment (wt%) | 1# | 2# | 3# | 4# | 5# | 6# | 7# |
|---|---|---|---|---|---|---|---|
| BaO | 0 | 0 | 0 | 1.5 | 0 | 0 | 0 |
| ZnO | 0 | 0 | 0 | 0 | 0 | 0 | 1.0 |
| $Li_2O$ | 0 | 0 | 0 | 0 | 0 | 0 | 0 |
| $Na_2O$ | 0 | 0 | 0 | 0 | 0 | 0 | 0 |
| $K_2O$ | 0 | 0 | 0 | 0 | 0 | 0 | 0 |
| $La_2O_3$ | 0 | 0 | 0 | 0 | 0 | 0 | 0 |
| $Gd_2O_3$ | 0 | 0 | 0 | 0 | 0 | 0 | 0 |
| $Y_2O_3$ | 0 | 0 | 0 | 0 | 1.0 | 0 | 0 |
| $Yb_2O_3$ | 0 | 0 | 0 | 0 | 0 | 0 | 0 |
| $WO_3$ | 0 | 0 | 0 | 0 | 1.0 | 0 | 0 |
| $ZrO_2$ | 0.5 | 0 | 0 | 0 | 0 | 0 | 0 |
| $TiO_2$ | 0 | 0 | 0 | 0 | 2.0 | 0 | 0 |
| $P_2O_5$ | 0 | 0.5 | 0 | 0 | 0 | 0 | 0 |
| $Sb_2O_3$ | 0.1 | 0.15 | 0.1 | 0.2 | 0.12 | 0.1 | 0.1 |
| $CeO_2$ | 0 | 0 | 0 | 0 | 0 | 0 | 0 |
| $SnO_2$ | 0 | 0 | 0 | 0 | 0 | 0 | 0 |
| SnO | 0 | 0 | 0 | 0 | 0 | 0 | 0 |
| Total | 100.0 | 100.0 | 100.0 | 100.0 | 100.0 | 100.0 | 100.0 |
| $Al_2O_3/B_2O_3$ | 2.744 | 1.799 | 2.115 | 1.316 | 1.097 | 1.503 | 1.191 |
| CaO/(BaO+SrO+MgO) | 3.194 | 3.84 | 4.762 | 4.474 | 4.706 | 7.25 | 3.25 |
| $CaO/SiO_2$ | 0.215 | 0.174 | 0.165 | 0.136 | 0.125 | 0.101 | 0.184 |
| $(MgO+CaO)/B_2O_3$ | 1.841 | 1.057 | 1.391 | 0.761 | 0.926 | 0.462 | 0.885 |
| $(MgO+CaO+SrO+BaO)/(SiO_2+B_2O_3)$ | 0.244 | 0.182 | 0.174 | 0.141 | 0.13 | 0.092 | 0.195 |
| $Ln_2O_3/B_2O_3$ | 0 | 0 | 0 | 0 | 0.095 | 0 | 0 |
| $Rn_2O/(MgO+CaO)$ | 0 | 0 | 0 | 0 | 0 | 0 | 0 |
| $\alpha_{20/300°C}(\times 10^{-7}/K)$ | 38 | 28 | 32 | 31 | 35 | 29 | 26 |
| $T_g(°C)$ | 675 | 668 | 682 | 675 | 670 | 674 | 665 |
| $\tau_{365nm}(\%)$ | 87.4 | 86.5 | 88.0 | 86.6 | 87.1 | 87.2 | 86.8 |
| $D_A$ | Class 1 | Class 1 | Class 1 | Class 1 | Class 1 | Class 1 | Class 1 |
| Dw | Class 1 | Class 1 | Class 1 | Class 1 | Class 1 | Class 1 | Class 1 |
| E(GPa) | 70.5 | 72.4 | 70.7 | 72.6 | 73.2 | 75.5 | 70.6 |
| $\rho(g/cm^3)$ | 2.37 | 2.41 | 2.45 | 2.38 | 2.40 | 2.46 | 2.38 |

Table 2.

| Embodiment (wt%) | 8# | 9# | 10# | 11# | 12# | 13# | 14# |
|---|---|---|---|---|---|---|---|
| $SiO_2$ | 61.7 | 62.2 | 57.3 | 65.25 | 60.3 | 62.5 | 60.0 |
| $B_2O_3$ | 8.7 | 8.4 | 16.5 | 5.9 | 9.7 | 10.5 | 14.1 |
| $Al_2O_3$ | 18.2 | 17.2 | 16.87 | 12.2 | 18.0 | 17.2 | 15.7 |
| MgO | 2.5 | 0.6 | 1.4 | 4.0 | 2.2 | 1.3 | 1.4 |
| CaO | 8.8 | 9.3 | 7.8 | 12.5 | 8.6 | 8.4 | 7.2 |
| SrO | 0 | 0 | 0 | 0 | 0 | 0 | 0 |
| BaO | 0 | 2.2 | 0 | 0 | 0 | 0 | 0 |
| ZnO | 0 | 0 | 0 | 0 | 0 | 0 | 0 |
| $Li_2O$ | 0 | 0 | 0 | 0 | 0 | 0 | 0 |
| $Na_2O$ | 0 | 0 | 0 | 0 | 0 | 0 | 0 |
| $K_2O$ | 0 | 0 | 0 | 0 | 0 | 0 | 0 |
| $La_2O_3$ | 0 | 0 | 0 | 0 | 0 | 0 | 1.5 |
| $Gd_2O_3$ | 0 | 0 | 0 | 0 | 1.0 | 0 | 0 |
| $Y_2O_3$ | 0 | 0 | 0 | 0 | 0 | 0 | 0 |
| $Yb_2O_3$ | 0 | 0 | 0 | 0 | 0 | 0 | 0 |
| $WO_3$ | 0 | 0 | 0 | 0 | 0 | 0 | 0 |
| $ZrO_2$ | 0 | 0 | 0 | 0 | 0 | 0 | 0 |
| $TiO_2$ | 0 | 0 | 0 | 0 | 0 | 0 | 0 |
| $P_2O_5$ | 0 | 0 | 0 | 0 | 0 | 0 | 0 |
| $Sb_2O_3$ | 0.1 | 0.1 | 0.13 | 0.15 | 0.2 | 0.1 | 0.1 |
| $CeO_2$ | 0 | 0 | 0 | 0 | 0 | 0 | 0 |
| $SnO_2$ | 0 | 0 | 0 | 0 | 0 | 0 | 0 |
| SnO | 0 | 0 | 0 | 0 | 0 | 0 | 0 |
| Total | 100.0 | 100.0 | 100.0 | 100.0 | 100.0 | 100.0 | 100.0 |
| $Al_2O_3/B_2O_3$ | 2.092 | 2.048 | 1.022 | 2.068 | 1.856 | 1.638 | 1.113 |
| CaO/(BaO+SrO+MgO) | 3.52 | 3.321 | 5.571 | 3.125 | 3.909 | 6.462 | 5.143 |
| $CaO/SiO_2$ | 0.143 | 0.15 | 0.136 | 0.192 | 0.143 | 0.134 | 0.12 |
| (MgO+CaO)/$B_2O_3$ | 1.299 | 1.179 | 0.558 | 2.797 | 1.113 | 0.924 | 0.61 |
| (MgO+CaO+SrO+BaO)/($SiO_2$+$B_2O_3$) | 0.161 | 0.171 | 0.125 | 0.232 | 0.154 | 0.133 | 0.116 |
| $Ln_2O_3/B_2O_3$ | 0 | 0 | 0 | 0 | 0.103 | 0 | 0.106 |
| $Rn_2O$/(MgO+CaO) | 0 | 0 | 0 | 0 | 0 | 0 | 0 |
| $\alpha_{20/300°C}(\times 10^{-7}/K)$ | 35 | 36 | 26 | 30 | 28 | 27 | 36 |
| $T_g(°C)$ | 672 | 671 | 680 | 673 | 674 | 670 | 672 |
| $\tau_{365nm}(\%)$ | 85.7 | 88.1 | 87.4 | 87.2 | 87.5 | 86.5 | 87.4 |
| $D_A$ | Class 1 | Class 1 | Class 1 | Class 1 | Class 1 | Class 1 | Class 1 |

(continued)

| Embodiment (wt%) | 8# | 9# | 10# | 11# | 12# | 13# | 14# |
|---|---|---|---|---|---|---|---|
| Dw | Class 1 | Class 1 | Class 1 | Class 1 | Class 1 | Class 1 | Class 1 |
| E(GPa) | 74.5 | 72.8 | 73.0 | 75.1 | 78.2 | 72.4 | 72.1 |
| $\rho$(g/cm$^3$) | 2.42 | 2.46 | 2.32 | 2.35 | 2.42 | 2.41 | 2.47 |

Table 3.

| Embodiment (wt%) | 15# | 16# | 17# | 18# | 19# | 20# | 21# |
|---|---|---|---|---|---|---|---|
| $SiO_2$ | 61.5 | 56.4 | 53.8 | 62.0 | 63.4 | 65.0 | 60.5 |
| $B_2O_3$ | 11.8 | 17.3 | 15.28 | 9.8 | 7.7 | 10.3 | 10.2 |
| $Al_2O_3$ | 14.6 | 18.8 | 23.4 | 12.5 | 14.2 | 13.7 | 18.4 |
| MgO | 2.4 | 1.0 | 1.2 | 0.8 | 0.2 | 2.2 | 1.0 |
| CaO | 9.6 | 6.4 | 6.2 | 12.0 | 11.4 | 8.7 | 7.4 |
| SrO | 0 | 0 | 0 | 1.0 | 0 | 0 | 0.25 |
| BaO | 0 | 0 | 0 | 1.8 | 3.0 | 0 | 0.25 |
| ZnO | 0 | 0 | 0 | 0 | 0 | 0 | 0 |
| $Li_2O$ | 0 | 0 | 0 | 0 | 0 | 0 | 0 |
| $Na_2O$ | 0 | 0 | 0 | 0 | 0 | 0 | 2.0 |
| $K_2O$ | 0 | 0 | 0 | 0 | 0 | 0 | 0 |
| $La_2O_3$ | 0 | 0 | 0 | 0 | 0 | 0 | 0 |
| $Gd_2O_3$ | 0 | 0 | 0 | 0 | 0 | 0 | 0 |
| $Y_2O_3$ | 0 | 0 | 0 | 0 | 0 | 0 | 0 |
| $Yb_2O_3$ | 0 | 0 | 0 | 0 | 0 | 0 | 0 |
| $WO_3$ | 0 | 0 | 0 | 0 | 0 | 0 | 0 |
| $ZrO_2$ | 0 | 0 | 0 | 0 | 0 | 0 | 0 |
| $TiO_2$ | 0 | 0 | 0 | 0 | 0 | 0 | 0 |
| $P_2O_5$ | 0 | 0 | 0 | 0 | 0 | 0 | 0 |
| $Sb_2O_3$ | 0.1 | 0.1 | 0.12 | 0.1 | 0.1 | 0.1 | 0 |
| $CeO_2$ | 0 | 0 | 0 | 0 | 0 | 0 | 0 |
| $SnO_2$ | 0 | 0 | 0 | 0 | 0 | 0 | 0 |
| SnO | 0 | 0 | 0 | 0 | 0 | 0 | 0 |
| Total | 100.0 | 100.0 | 100.0 | 100.0 | 100.0 | 100.0 | 100.0 |
| $Al_2O_3/B_2O_3$ | 1.237 | 1.087 | 1.531 | 1.276 | 1.844 | 1.33 | 1.804 |
| CaO/(BaO+SrO+MgO) | 4 | 6.4 | 5.167 | 3.333 | 3.563 | 3.955 | 4.933 |
| $CaO/SiO_2$ | 0.156 | 0.113 | 0.115 | 0.194 | 0.18 | 0.134 | 0.122 |
| (MgO+CaO)/$B_2O_3$ | 1.017 | 0.428 | 0.484 | 1.306 | 1.506 | 1.058 | 0.824 |
| (MgO+CaO+SrO+BaO)/($SiO_2$+$B_2O_3$) | 0.164 | 0.1 | 0.107 | 0.217 | 0.205 | 0.145 | 0.126 |

(continued)

| Embodiment (wt%) | 15# | 16# | 17# | 18# | 19# | 20# | 21# |
|---|---|---|---|---|---|---|---|
| $Ln_2O_3/B_2O_3$ | 0 | 0 | 0 | 0 | 0 | 0 | 0 |
| $Rn_2O/(MgO+CaO)$ | 0 | 0 | 0 | 0 | 0 | 0 | 0.238 |
| $CC_{20/300°C}(\times 10^{-7}/K)$ | 27 | 27 | 31 | 37 | 35 | 30 | 30 |
| $T_g(°C)$ | 669 | 674 | 672 | 675 | 678 | 674 | 675 |
| $\tau_{365nm}(\%)$ | 87.2 | 88.5 | 87.4 | 87.3 | 87.5 | 87.5 | 87.5 |
| $D_A$ | Class 1 | Class 1 | Class 1 | Class 1 | Class 1 | Class 1 | Class 1 |
| $D_W$ | Class 1 | Class 1 | Class 1 | Class 1 | Class 1 | Class 1 | Class 1 |
| E(GPa) | 78.5 | 76.5 | 74.1 | 73.5 | 73.3 | 72.4 | 74.1 |
| $\rho(g/cm^3)$ | 2.44 | 2.43 | 2.38 | 2.37 | 2.40 | 2.45 | 2.40 |

**Claims**

1. A glass composition, wherein components thereof are represented by weight percentage, comprising: 50-70% of $SiO_2$; 3-20% of $B_2O_3$; 11-25% of $Al_2O_3$; 1-15% of CaO; 0-10% of MgO.

2. The glass composition according to claim 1, wherein components thereof are represented by weight percentage, further comprising: 0-10% of SrO; and/or 0-10% of BaO; and/or 0-8% of ZnO; and/or 0-8% of $Rn_2O$; and/or 0-8% of $Ln_2O_3$; and/or 0-5% of $WO_3$; and/or 0-5% of $ZrO_2$; and/or 0-5% of $TiO_2$; and/or 0-5% of $P_2O_5$; and/or 0-1% of clarifying agent; the $Rn_2O$ is one or more of $Li_2O$, $Na_2O$, and $K_2O$, $Ln_2O_3$ is one or more of $La_2O_3$, $Gd_2O_3$, $Y_2O_3$, and $Yb_2O_3$, and the clarifying agent is one or more of $Sb_2O_3$, $CeO_2$, $SnO_2$, and SnO.

3. The glass composition, wherein components thereof contain $SiO_2$, $B_2O_3$, $Al_2O_3$, and alkaline-earth metal oxide, transition temperature $T_g$ of the glass composition is above 620°C, outer transmittance $\tau_{365nm}$ is above 70% at 365nm, and the alkaline-earth metal oxide is one or more of MgO, CaO, SrO, and BaO.

4. The glass composition according to claim 3, wherein components thereof are represented by weight percentage, comprising: 50-70% of $SiO_2$; and/or 3-20% of $B_2O_3$; and/or 11-25% of $Al_2O_3$; and/or 1-15% of CaO; and/or 0-10% of MgO; and/or 0-10% of SrO; and/or 0-10% of BaO; and/or 0-8% of ZnO; and/or 0-8% of $Rn_2O$; and/or 0-8% of $Ln_2O_3$; and/or 0-5% of $WO_3$; and/or 0-5% of $ZrO_2$; and/or 0-5% of $TiO_2$; and/or 0-5% of $P_2O_5$; and/or 0-1% of clarifying agent; the $Rn_2O$ is one or more of $Li_2O$, $Na_2O$, and $K_2O$, $Ln_2O_3$ is one or more of $La_2O_3$, $Gd_2O_3$, $Y_2O_3$, and $Yb_2O_3$, and the clarifying agent is one or more of $Sb_2O_3$, $CeO_2$, $SnO_2$, and SnO.

5. The glass composition according to any of claims 1-4, wherein components thereof are represented by weight percentage, and one or more of the following 7 conditions are satisfied:

   1) $Al_2O_3/B_2O_3$ is 0.6-4.0;
   2) $CaO/SiO_2$ is 0.02-0.25;
   3) $(MgO+CaO)/B_2O_3$ is 0.1-4.0;
   4) $CaO/(BaO+SrO+MgO)$ is 0.5-10.0;
   5) $(MgO+CaO+SrO+BaO)/(SiO_2+B_2O_3)$ is 0.02-0.7;
   6) $Rn_2O/(MgO+CaO)$ is below 1.0;
   7) $Ln_2O_3/B_2O_3$ is below 1.0, and the $Rn_2O$ is one or more of $Li_2O$, $Na_2O$, and $K_2O$, and the $Ln_2O_3$ is one or more of $La_2O_3$, $Gd_2O_3$, $Y_2O_3$, and $Yb_2O_3$.

6. The glass composition according to any of claims 1-4, wherein components thereof are represented by weight percentage, and one or more of the following 7 conditions are satisfied:

   1) $Al_2O_3/B_2O_3$ is 0.8-3.5;

2) $CaO/SiO_2$ is 0.04-0.22;
3) $(MgO+CaO)/B_2O_3$ is 0.2-3.5;
4) $CaO/(BaO+SrO+MgO)$ is 2.0-8.0;
5) $(MgO+CaO+SrO+BaO)/(SiO_2+B_2O_3)$ is 0.04-0.6;
6) $Rn_2O/(MgO+CaO)$ is below 0.8;
7) $Ln_2O_3/B_2O_3$ is below 0.8, and the $Rn_2O$ is one or more of $Li_2O$, $Na_2O$, and $K_2O$, and the $Ln_2O_3$ is one or more of $La_2O_3$, $Gd_2O_3$, $Y_2O_3$, and $Yb_2O_3$.

7. The glass composition according to any of claims 1-4, wherein components thereof are represented by weight percentage, and one or more of the following 7 conditions are satisfied:

1) $Al_2O_3/B_2O_3$ is 1.0-3.0;
2) $CaO/SiO_2$ is 0.08-0.2;
3) $(MgO+CaO)/B_2O_3$ is 0.3-2.0;
4) $CaO/(BaO+SrO+MgO)$ is 3.0-7.0;
5) $(MgO+CaO+SrO+BaO)/(SiO_2+B_2O_3)$ is 0.05-0.5;
6) $Rn_2O/(MgO+CaO)$ is below 0.5;
7) $Ln_2O_3/B_2O_3$ is below 0.5, and the $Rn_2O$ is one or more of $Li_2O$, $Na_2O$, and $K_2O$, and the $Ln_2O_3$ is one or more of $La_2O_3$, $Gd_2O_3$, $Y_2O_3$, and $Yb_2O_3$.

8. The glass composition according to any of claims 1-4, wherein components thereof are represented by weight percentage, and one or more of the following 7 conditions are satisfied:

1) $Al_2O_3/B_2O_3$ is 1.2-2.5;
2) $CaO/SiO_2$ is 0.1-0.18;
3) $(MgO+CaO)/B_2O_3$ is 0.5-1.5;
4) $CaO/(BaO+SrO+MgO)$ is 3.5-6.0;
5) $(MgO+CaO+SrO+BaO)/(SiO_2+B_2O_3)$ is 0.08-0.3;
6) $Rn_2O/(MgO+CaO)$ is below 0.2;
7) $Ln_2O_3/B_2O_3$ is below 0.2, and the $Rn_2O$ is one or more of $Li_2O$, $Na_2O$, and $K_2O$, and the $Ln_2O_3$ is one or more of $La_2O_3$, $Gd_2O_3$, $Y_2O_3$, and $Yb_2O_3$.

9. The glass composition according to any of claims 1-4, wherein components thereof are represented by weight percentage, in which: $SiO_2$ is 54-68%; and/or $B_2O_3$ is 4-17%; and/or $Al_2O_3$ is 12-24%; and/or CaO is 2-13%; and/or MgO is 0.1-8%; and/or SrO is 0-5%; and/or BaO is 0-5%; and/or ZnO is 0-5%; and/or $Rn_2O$ is 0-5%; and/or $Ln_2O_3$ is 0-5%; and/or $WO_3$ is 0-3%; and/or $ZrO_2$ is 0-3%; and/or $TiO_2$ is 0-2%; and/or $P_2O_5$ is 0-2%; and/or clarifying agent is 0-0.8%; the $Rn_2O$ is one or more of $Li_2O$, $Na_2O$, and $K_2O$, $Ln_2O_3$ is one or more of $La_2O_3$, $Gd_2O_3$, $Y_2O_3$, and $Yb_2O_3$, and the clarifying agent is one or more of $Sb_2O_3$, $CeO_2$, $SnO_2$, and SnO.

10. The glass composition according to any of claims 1-4, wherein components thereof are represented by weight percentage, in which: $SiO_2$ is 55-64%; and/or $B_2O_3$ is 6-15%; and/or $Al_2O_3$ is 14-20%; and/or CaO is 4-9.5%; and/or MgO is 0.5-5%; and/or SrO is 0-2%; and/or BaO is 0-2%; and/or ZnO is 0-3%; and/or $Rn_2O$ is 0-2%; and/or $Ln_2O_3$ is 0-2%; and/or $WO_3$ is 0-1%; and/or $ZrO_2$ is 0-1%; and/or $TiO_2$ is 0-1%; and/or $P_2O_5$ is 0-1%; and/or clarifying agent is 0-0.5%; the $Rn_2O$ is one or more of $Li_2O$, $Na_2O$, and $K_2O$, $Ln_2O_3$ is one or more of $La_2O_3$, $Gd_2O_3$, $Y_2O_3$, and $Yb_2O_3$, and the clarifying agent is one or more of $Sb_2O_3$, $CeO_2$, $SnO_2$, and SnO.

11. The glass composition according to any of claims 1-4, wherein the glass composition does not contain $Ln_2O_3$; and/or does not contain $Rn_2O$; and/or does not contain ZnO; and/or does not contain $ZrO_2$; and/or does not contain $TiO_2$; the $Rn_2O$ is one or more of $Li_2O$, $Na_2O$, and $K_2O$, and $Ln_2O_3$ is one or more of $La_2O_3$, $Gd_2O_3$, $Y_2O_3$, and $Yb_2O_3$.

12. The glass composition according to any of claims 1-4, wherein thermal expansion coefficient $\alpha_{20/300°C}$ of the glass composition is $22\times10^{-7}/K$-$45\times10^{-7}/K$; and/or transition temperature $T_g$ is above 620°C; and/or outer transmittance $\tau_{365nm}$ is above 70% at 365nm; and/or acid resistance stability $D_A$ is above Class 3; and/or water resistance stability Dw is above Class 3; and/or Young's modulus E is 60-90GPa; and/or density $\rho$ is below $3.0g/cm^3$.

13. The glass composition according to any of claims 1-4, wherein thermal expansion coefficient $\alpha_{20/300°C}$ of the glass composition is $28\times10^{-7}/K$-$37\times10^{-7}/K$; and/or transition temperature $T_g$ is 660-800°C; and/or outer transmittance $\tau_{365nm}$ is above 85% at 365nm; and/or acid resistance stability $D_A$ is Class 1; and/or water resistance stability Dw is Class 1; and/or Young's modulus E is 70-78GPa; and/or density $\rho$ is below 2.6g/cm$^3$.

14. A packaging material, made of the glass composition according to any of claims 1-13.

15. A packaging carrier, made of the glass composition according to any of claims 1-13.

## INTERNATIONAL SEARCH REPORT

| International application No. |
|---|
| **PCT/CN2022/117241** |

**A. CLASSIFICATION OF SUBJECT MATTER**

C03C 3/083(2006.01)i; C03C 3/089(2006.01)i; C03C 3/091(2006.01)i; C03C 3/093(2006.01)i

According to International Patent Classification (IPC) or to both national classification and IPC

**B. FIELDS SEARCHED**

Minimum documentation searched (classification system followed by classification symbols)

C03C

Documentation searched other than minimum documentation to the extent that such documents are included in the fields searched

Electronic data base consulted during the international search (name of data base and, where practicable, search terms used)

CNABS, CNTXT, ENTXT, DWPI, CNKI: 玻璃, SiO2, B2O3, Al2O3, CaO, MgO, glass, silica, silicon dioxide, boron oxide, boric oxide, aluminium oxide, alumina, calcium oxide, magnesium oxide.

**C. DOCUMENTS CONSIDERED TO BE RELEVANT**

| Category* | Citation of document, with indication, where appropriate, of the relevant passages | Relevant to claim No. |
|---|---|---|
| X | CN 110818251 A (BENGBU ZHONGGUANGDIAN TECHNOLOGY CO., LTD. et al.) 21 February 2020 (2020-02-21) description, paragraphs 7-30, and embodiment 8 | 1-15 |
| X | CN 101400614 A (CORNING INC.) 01 April 2009 (2009-04-01) description, page 5, the second-to-last paragraph to page 8, paragraph 3 | 1-15 |
| X | CN 112851113 A (CDGM GLASS CO., LTD.) 28 May 2021 (2021-05-28) description, paragraphs 9-23 | 1-15 |
| X | CN 109160727 A (TUNGHSU TECHNOLOGY GROUP CO., LTD. et al.) 08 January 2019 (2019-01-08) description, paragraphs 6-30 | 1-15 |
| X | CN 110885187 A (CDGM GLASS CO., LTD.) 17 March 2020 (2020-03-17) description, paragraphs 6-35 | 1-15 |
| X | US 2021238081 A1 (CDGM GLASS CO., LTD.) 05 August 2021 (2021-08-05) description, paragraphs 7-39 | 1-15 |
| X | US 2013252797 A1 (RADA MIROSLAV et al.) 26 September 2013 (2013-09-26) description, paragraphs 11-34 | 1-15 |

☑ Further documents are listed in the continuation of Box C. ☑ See patent family annex.

| | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 November 2022** | **07 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2022/117241**

**C. DOCUMENTS CONSIDERED TO BE RELEVANT**

| Category* | Citation of document, with indication, where appropriate, of the relevant passages | Relevant to claim No. |
|---|---|---|
| A | JP 2009286680 A (OHARA K. K.) 10 December 2009 (2009-12-10)<br>entire document | 1-15 |

Form PCT/ISA/210 (second sheet) (January 2015)

**INTERNATIONAL SEARCH REPORT**
**Information on patent family members**

International application No.

**PCT/CN2022/117241**

| Patent document cited in search report | | | Publication date (day/month/year) | Patent family member(s) | | | Publication date (day/month/year) |
|---|---|---|---|---|---|---|---|
| CN | 110818251 | A | 21 February 2020 | None | | | |
| CN | 101400614 | A | 01 April 2009 | KR | 20080098058 | A | 06 November 2008 |
| | | | | CN | 103172259 | A | 26 June 2013 |
| | | | | EP | 1996525 | A1 | 03 December 2008 |
| | | | | US | 2014243186 | A1 | 28 August 2014 |
| | | | | WO | 2007095115 | A1 | 23 August 2007 |
| | | | | JP | 2013082627 | A | 09 May 2013 |
| | | | | JP | 2009525942 | A | 16 July 2009 |
| | | | | CN | 103121796 | A | 29 May 2013 |
| | | | | US | 2011048074 | A1 | 03 March 2011 |
| | | | | JP | 2013082626 | A | 09 May 2013 |
| | | | | US | 2013065747 | A1 | 14 March 2013 |
| | | | | US | 2007191207 | A1 | 16 August 2007 |
| | | | | JP | 2016026138 | A | 12 February 2016 |
| | | | | CN | 101400614 | B | 27 March 2013 |
| CN | 112851113 | A | 28 May 2021 | CN | 112851113 | B | 15 April 2022 |
| CN | 109160727 | A | 08 January 2019 | TW | 202021921 | A | 16 June 2020 |
| | | | | WO | 2020078377 | A1 | 23 April 2020 |
| | | | | US | 2021340056 | A1 | 04 November 2021 |
| | | | | JP | 2022505105 | A | 14 January 2022 |
| | | | | EP | 3868726 | A1 | 25 August 2021 |
| | | | | KR | 20210086648 | A | 08 July 2021 |
| | | | | CN | 109160727 | B | 13 October 2020 |
| CN | 110885187 | A | 17 March 2020 | None | | | |
| US | 2021238081 | A1 | 05 August 2021 | WO | 2019205938 | A1 | 31 October 2019 |
| | | | | JP | 2021522152 | A | 30 August 2021 |
| | | | | TW | 201945307 | A | 01 December 2019 |
| | | | | US | 11440836 | B2 | 13 September 2022 |
| US | 2013252797 | A1 | 26 September 2013 | PL | 2625149 | T3 | 31 March 2015 |
| | | | | EP | 2625149 | A1 | 14 August 2013 |
| | | | | ES | 2511146 | T3 | 22 October 2014 |
| | | | | CN | 103189325 | A | 03 July 2013 |
| | | | | PT | 2625149 | E | 04 September 2014 |
| | | | | SI | 2625149 | T1 | 28 November 2014 |
| | | | | WO | 2013029573 | A1 | 07 March 2013 |
| JP | 2009286680 | A | 10 December 2009 | None | | | |

Form PCT/ISA/210 (patent family annex) (January 2015)